(19) Europäisches Patentamt / European Patent Office / Office européen des brevets

(11) **EP 4 434 132 B1**

(12) **EUROPEAN PATENT SPECIFICATION**

(45) Date of publication and mention
of the grant of the patent:
**01.10.2025  Bulletin 2025/40**

(21) Application number: **21843916.4**

(22) Date of filing: **20.12.2021**

(51) International Patent Classification (IPC):
*H02J 1/10* (2006.01)          *H02J 3/38* (2006.01)
*H02M 3/335* (2006.01)

(52) Cooperative Patent Classification (CPC):
**H02J 3/381; H02J 1/102; H02M 1/007;**
H02J 2300/26; H02M 1/0077; H02M 3/01;
H02M 3/156; H02M 3/33573; Y02E 10/56

(86) International application number:
**PCT/EP2021/086893**

(87) International publication number:
**WO 2023/117045 (29.06.2023 Gazette 2023/26)**

(54) **PHOTO-VOLTAIC POWER CONVERSION ARRANGEMENT**

ANORDNUNG ZUR UMWANDLUNG VON FOTOVOLTAISCHER ENERGIE

AGENCEMENT DE CONVERSION DE PUISSANCE PHOTOVOLTAÏQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.09.2024  Bulletin 2024/39**

(73) Proprietor: **Huawei Digital Power Technologies
Co., Ltd.
Shenzhen, Guangdong 518043 (CN)**

(72) Inventors:
• **WIJEKOON, Piniwan Thiwanka Bandara
80992 Munich (DE)**
• **GAONA, Daniel
80992 Munich (DE)**

(74) Representative: **Maiwald GmbH
Engineering
Elisenhof
Elisenstrasse 3
80335 München (DE)**

(56) References cited:
**US-A1- 2010 157 638     US-B1- 10 263 456**

## Description

<u>TECHNICAL FIELD</u>

The disclosure relates to the field of photovoltaics (PV), e.g., PV power plants, for connection to medium voltage (MV) / high voltage (HV) grids. The disclosure particularly relates to a photo-voltaic power conversion arrangement and a corresponding method for connecting a plurality of photo-voltaic panels of a photo-voltaic arrangement to a power grid network, e.g., a MV/HV grid. More particularly, the disclosure relates to PV power-plant architectures with isolated, partial power processing, Maximum Power-Point Trackers (MPPT) for interconnection to MV/HV AC and DC grids.

<u>BACKGROUND</u>

With the advent of photovoltaic (PV) technology, the installed capacity of PV power plants is increasing rapidly. Large solar PV power plants are usually connected to MV/HV grids. Interconnection to MV grid is required for effective energy transmission and distribution at larger distances. The interconnection architecture must be efficient, provide galvanic isolation, cost-effective and ensure the maximum energy yield from the PV panels/plant.

US 2010/0157638 A1 describes an energy conversion system with power control.

US 10,263,456 B1 describes an integrated three-port bidirectional DC-DC converter for renewable energy sources.

<u>SUMMARY</u>

This disclosure provides an efficient and cost-effective solution for an interconnection of PV power plants to a power grid network, in particular a medium voltage grid. The solution provides galvanic isolation and ensures efficient energy yield from the PV power panels.

The foregoing and other objects are achieved by the features of the independent claims. Further implementation forms are apparent from the dependent claims, the description and the figures.

The disclosure addresses the fundamental issue mentioned above. The disclosure provides a concept for connecting a solar power plant to a MV/HV grid using a partial-power MPPT tracker. The disclosure also provides a concept of control for preventing over-voltages.

The disclosure presents PV architectures and their respective control strategy. These architectures rely on the use of a partial-power DC/DC topology and a dedicated control strategy which achieves higher overall efficiencies. The main architecture is explained below with respect to Figure 1 followed by a description of two alternative configurations, see below description with respect to Figures 5 and 6.

Different interconnection architectures are presented hereinafter. A Cascaded H-bridge (CHB) architecture and its control strategy are presented for the connection of PV plants to MV/HV grids. A Modular-multilevel (MMC) architecture and its control strategy are presented for the connection of PV plants to MV/HV grids.

In order to describe the disclosure in detail, the following terms, abbreviations and notations will be used:

PV      photo-voltaic
HV      high-voltage, in this disclosure between 100kV and above, for example
MV      medium-voltage, in this disclosure between 1500V and 100kV, for example
LV      low-voltage, in this disclosure below 1500V, for example
MPPT    Maximum-Power-Point-Tracking (algorithm, hardware in mechanical MPPT or scheme)
IMMPT   Isolated MPPT tracker
DC      direct current
AC      alternating current
PWM     Pulse Width Modulation
SRC     series resonant converter
CHB     Cascaded H-bridge
MMC     Modular-multilevel converter
PCC     point-of-common-coupling

In this disclosure, converters, i.e., power converters are described. Power converters, also referred to as power electronics converters, are applied for converting electric energy from one form to another, such as converting between DC and DC, e.g., between low voltage DC and high or medium voltage DC or between AC and DC. Power converter can also change the voltage or frequency or some combination of these. Power electronics converter are based on power electronics switches that can be actively controlled by applying ON/OFF logic (i.e., PWM operation, usually commanded by a closed loop control algorithm).

In this disclosure, full-power converters and partial power converters are described. Full-power and partial-power converter topologies can be used for the interconnection of PV systems to power network grids or simply called grids.

Full-power converters process the entire power from the PV panel. As a result, higher power losses and lower efficiency are expected.

In Partial-power topologies, a portion of the power is fed directly from the source (i.e., PV-panel) to the load ($P_{dir}$) while another portion is first processed by an intermediate converter ($P_{diff}$). The portion of power processed by the partial converter ($P_{diff}$) depends on the ratio between the overall input and output voltages ($G = U_{out}/U_{in}$). Since only a portion of the power ($P_{diff}$) is regulated by the intermediate DC-DC converter, power losses are lower, yielding higher overall efficiency.

If the input and output voltages match, the partial-power converter does not process any power. The power, however, increases as the voltage gain departs from 1. Since only a portion of the power is regulated by the intermediate DC-DC converter, power losses are lower, yielding higher overall efficiency. Most of the partial-power topologies are non-isolated. For isolation, a transformer can be added after the converter to reduce the input/output voltage ratio and to comply with safety regulations (reduce CM currents, touch currents, etc.). However, this increases the complexity of the system as well as the component count and cost. In PV systems, isolated topologies are preferred to comply with touch-currents and common-mode requirements related with electrical safety at the low voltage PV panel side.

In this disclosure, Cascaded H-bridge (CHB) converter topologies and Modular-multilevel converter (MMC) topologies are described. These solutions rely on the segregation of the equivalent DC-link and the use of cells with simpler power electronics devices. They offer higher granularity in terms of MPPT with independent control and can be connected directly to MV grids.

Different configurations are possible when using CHB for PV systems; namely, star-connection, delta-connection, and magnetic-link connection. They all rely on high-frequency isolated DC/DC converters. In the case of the magnetic link-connection, exchange of energy between PV arrays is achieved via intercoupled transformers to offer a more balanced operation. CHBs are optimum when the PV system and the point of common coupling (PCC) to a MV grid are at close proximity. A transformer can be later used to interconnect the MV and HV grids.

Modular multilevel converter (MMC) can be used in three ways: a) with a non-isolated power balancer, b) with isolated DC/DC converter (e.g., flyback, dual active bridge (DAB), etc.) with independent DC links, or c) with segregated DC-link (floating capacitors) deriving from a common DC link. Configuration a) does not provide isolation and it consequently requires a bulky low-frequency transformer down the line. Configuration b) provides insulation and it is ideal to interconnect the PV plant to a MV grid in close proximity. On the other hand, configuration c) is used as a back-end topology and it is useful when the PV system and the PCC (MV grid) are not at close proximity. In this case, a HV line can be used to interconnect the solar PV plant to this MMC.

In this disclosure, Maximum power point tracking (MPPT) schemes and algorithms are described. MPPT is a technique used with sources with variable power to maximize energy extraction under all conditions. The technique is most commonly used with photovoltaic (PV) solar systems.

PV solar systems exist in many different configurations with regard to their relationship to inverter systems, external grids, battery banks, or other electrical loads. Regardless of the ultimate destination of the solar power, the central problem addressed by MPPT is that the efficiency of power transfer from the solar cell depends on the amount of sunlight falling on the solar panels, the temperature of the solar panel and the electrical characteristics of the load. As these conditions vary, the load characteristic that gives the highest power transfer efficiency changes. The efficiency of the system is optimized when the load characteristic changes to keep the power transfer at highest efficiency. This load characteristic is called the maximum power point (MPP). MPPT is the process of finding this point and keeping the load characteristic there. Electrical circuits can be designed to present arbitrary loads to the photovoltaic cells and then convert the voltage, current, or frequency to suit other devices or systems, and MPPT solves the problem of choosing the best load to be presented to the cells in order to get the most usable power out.

According to a first aspect, the disclosure relates to a photo-voltaic power conversion arrangement for connecting a plurality of photo-voltaic panels of a photo-voltaic arrangement via a transmission line to a power grid network, the photo-voltaic power conversion arrangement comprising: a plurality of photo-voltaic converter modules connected in series, each photo-voltaic converter module comprising a plurality of parallel connected DC-DC converter cells, each DC-DC converter cell comprising: a first terminal for connecting the DC-DC converter cell to a respective photo-voltaic panel of the photo-voltaic arrangement associated with the DC-DC converter cell, the first terminal being configured to provide a first DC voltage; a second terminal for connecting the DC-DC converter cell to the transmission line, the second terminal being configured to provide a second DC voltage; a first DC-DC converter stage configured to convert the first DC voltage into an intermediate DC voltage, wherein a power converted by the first DC-DC converter stage corresponds to a partial power provided by the respective photo-voltaic panel; and a second DC-DC converter stage configured to provide the second DC voltage based on a conversion of the first DC voltage and the intermediate DC voltage, wherein the second DC-DC converter stage is configured to galvanically isolate the first terminal from the second terminal.

This photo-voltaic power conversion arrangement can be advantageously applied for PV applications such as solar-roof applications, for example. The photo-voltaic power conversion arrangement provides MPPT tracking options, large voltage conversion ratio, and galvanic isolation while ensuring high conversion efficiency.

The photo-voltaic power conversion arrangement provides partial-power processing. As a result, the efficiency of the system can be increased. Higher efficiency is directly correlated to higher power-density and lower thermal management requirements. Utilization of the semiconductor devices can be increased which will result in reduced cost.

The solution can be ideally applied to connecting PV panels to a power grid network where isolation is required and where a large voltage difference exists between the input (PV panel) and output (power grid network) voltages. The photo-voltaic power conversion arrangement provides a high efficiency even for long transmission lines, e.g., in the range of kilometers.

The photo-voltaic power conversion arrangement allows MPPT regulation that can be advantageously implemented with different control strategies. For every case, the optimum power of the PV panel can be extracted at all times and delivered to the power grid network.

In an exemplary implementation of the photo-voltaic power conversion arrangement, each photo-voltaic converter module is configured to provide a respective DC link voltage, and a sum of the DC link voltages provided by the photo-voltaic converter modules corresponds to an average DC link voltage.

This provides the advantage that by adding all individual DC link voltages to an overall sum DC voltage, the solar power of the individual PV panels can be efficiently collected, resulting in high overall efficiency of this photo-voltaic power conversion arrangement.

In an exemplary implementation of the photo-voltaic power conversion arrangement, the photo-voltaic power conversion arrangement comprises: a master controller configured to control the operation mode of the plurality of photo-voltaic converter modules by adjusting an operation of the individual DC-DC converter cells, wherein the operation mode of the photo-voltaic converter modules is synchronous or interleaved.

This provides the advantage that by the master controller, different conditions of the individual PV panels can be efficiently considered, such as different shading of the panels which result in different irradiation and different power provided by the individual panels. The master controller can optimize the overall system efficiency of the photo-voltaic power conversion arrangement.

In an exemplary implementation of the photo-voltaic power conversion arrangement, in the synchronous operation mode the master controller is configured to control the DC-DC converter cells of a respective photo-voltaic converter module to synchronously provide power to the second DC voltages at the second terminals; and in the interleaved operation mode, the master controller is configured to control the DC-DC converter cells of a respective photo-voltaic converter module to provide power to the second DC voltages at the second terminals in an interleaved manner.

This provides the advantage that the DC-DC converter cells can be flexible operated depending on the specific requirements.

The DC-DC converter cells, i.e., the IMPPT trackers, ensure maximum power extraction from the panels. The voltages at the second terminals result from the overall DC link voltage and it is divided in Udc1, Udc2, etc., depending on the power extracted from each module.

In an exemplary implementation of the photo-voltaic power conversion arrangement, the master controller is configured to control the plurality of photo-voltaic converter modules to provide the power to the second DC voltages at the second terminals in the same voltage range.

This provides the advantage that the DC links can be operated at the same voltage range. The voltage at the output of each DC-DC converter cell, i.e., IMPPT, is the same and it is not controlled by controllers. This voltage depends only on the overall DC link and it is distributed depending on the power of each module. If they provide the same power, the voltages are the same, if not, they are not. The DC-DC converter cells, e.g., MPPT trackers, work more as the current source providing as much power as the panel can give to the output.

The master controller only needs to react when the voltage Udc1, Udc2 or Udc3 is increasing too much due to the difference in power produced by partial shading of the panels.

In an exemplary implementation of the photo-voltaic power conversion arrangement, each DC-DC converter cell comprises: a cell-specific controller configured to provide a respective control signal for controlling the first DC-DC converter stage and the second DC-DC converter stage.

This provides the advantage that the cell-specific controller can flexibly implement all required control strategies depending on specific requirements. For example, different MPPT algorithms can be implemented in software and executed by the cell-specific controller.

In an exemplary implementation of the photo-voltaic power conversion arrangement, the cell-specific controller is configured to control the first DC-DC converter stage based on a Maximum Power Point Tracking scheme.

This provides the advantage that each DC-DC converter cell can be used as an MPPT tracker to extract maximum power from the PV panels for power conversion. Such a solution offers high efficiency MPPT tracking capability and large voltage conversion ratio.

In an exemplary implementation of the photo-voltaic power conversion arrangement, the master controller is configured to control the cell-specific controller of a DC-DC converter cell to deviate from the Maximum Power Point Tracking scheme if the second DC voltage exceeds a threshold voltage in an effort to control a voltage mismatch between modules due to imbalances produced by partial shading, irregular irradiance, etc.

This provides the advantage that the master controller can control a voltage mismatch between the modules due to imbalances produced by partial shading, irregular irradiance, etc. Thus, an efficiency of the whole system can be improved.

In an exemplary implementation of the photo-voltaic power conversion arrangement, the photo-voltaic power conversion arrangement comprises: a DC-AC power converter coupled between the plurality of photo-voltaic converter modules and the power grid network, the DC-AC power converter being configured to convert the average DC link voltage to an AC voltage of the power grid network.

This provides the advantage that the DC-AC power converter allows to connect a DC-based photovoltaic arrangement to an AC-based power grid. By using the average DC link for conversion, power fluctuations in the power grid can be avoided or at least reduced.

In an exemplary implementation of the photovoltaic power conversion arrangement, the DC-AC power converter comprises a DC-AC converter of any kind such as a modular-multilevel converter topology or a cascaded H-bridge topology.

This provides the advantage of higher flexibility. Depending on the specific requirements the best topology can be used.

In an exemplary implementation of the photovoltaic power conversion arrangement, the DC-AC power converter is configured to connect the photo-voltaic power conversion arrangement to a single-phase or to three phases of the power grid network.

This provides the advantage that the photovoltaic power conversion arrangement can be flexible connected to different power grid architectures.

In an exemplary implementation of the photovoltaic power conversion arrangement, the first terminal is configured to provide the first DC voltage with respect to a first reference terminal; and the second terminal is configured to provide the second DC voltage with respect to a second reference terminal, the second reference terminal being galvanically isolated from the first reference terminal.

This provides the advantage that with this photo-voltaic power conversion arrangement, galvanic isolation, voltage regulation, and power transfer can be advantageously achieved with the use of a single transformer and low component count.

In an exemplary implementation of the photovoltaic power conversion arrangement, the first DC-DC converter stage comprises a first converter terminal connected to the first terminal, and a second converter terminal, the first DC-DC converter stage being configured to provide the intermediate DC voltage at the second converter terminal with respect to the first reference terminal.

This provides the advantage that the photovoltaic power conversion arrangement can be separated into two stages, where the first DC-DC converter stage does not require galvanic isolation while the second DC-DC converter stage provides galvanic isolation.

In an exemplary implementation of the photovoltaic power conversion arrangement, the second DC-DC converter stage comprises: a first converter terminal connected to the first terminal; a second converter terminal connected to the second converter terminal of the first DC-DC converter stage; a third converter terminal connected to the second terminal; a fourth converter terminal connected to the first reference terminal; and a fifth converter terminal connected to the second reference terminal, wherein the second DC-DC converter stage is configured to provide the second DC voltage between the third converter terminal and the second reference terminal.

This provides the advantage that a variety of different designs can be implemented for realizing the second DC-DC converter stage, i.e., the isolating converter, hence improving design flexibility.

In an exemplary implementation of the photovoltaic power conversion arrangement, the second DC-DC converter stage comprises: a full-bridge inverter, the full-bridge inverter comprising a first inverter leg connected between the first converter terminal and the fourth converter terminal; and a second inverter leg connected between the second converter terminal and the fourth converter terminal; and a rectifier connected to the second terminal and to the second reference terminal.

This provides the advantage that MPPT regulation executed by the first DC-DC converter stage, i.e., the non-isolated converter stage, allows the second DC-DC converter stage, i.e., the resonant converter stage to operate with constant frequency and duty-cycle. As a result, the accuracy requirements of the full-bridge inverter can be relaxed.

In an exemplary implementation of the photovoltaic power conversion arrangement, the photo-voltaic power conversion arrangement may further comprise a low-pass filter coupled between the first terminal and the second DC-DC converter stage. The low-pass filter is configured to suppress current harmonics of the photovoltaic panel.

This provides the advantage that current harmonics of the PV-panel can be advantageously suppressed without deteriorating the functionality of the photo-voltaic power conversion arrangement. I.e., the photo-voltaic power conversion arrangement can be coupled to non-ideal PV-panels without a significant decrease in performance.

In an exemplary implementation of the photovoltaic power conversion arrangement, the second DC-DC converter stage is configured to combine the first DC voltage and the intermediate DC voltage for conversion into the second DC voltage.

This provides the advantage that the first DC-DC converter stage can advantageously process the partial power provided by the photo-voltaic panel while the second DC-DC converter stage can process the full power for power conversion and connection to the grid.

In an exemplary implementation of the photovoltaic power conversion arrangement, the first DC-DC converter stage comprises at least one DC-DC converter of any family, in particular a buck-converter, a boost-converter or a buck-boost converter, for conversion of the first DC voltage.

This provides the advantage of design flexibility where a variety of different DC-DC converter designs can be implemented depending on the specific design requirements.

In an exemplary implementation of the photovoltaic power conversion arrangement, the second DC-DC converter stage comprises: a transformer comprising a primary side and a secondary side, wherein the primary side of the transformer is coupled to the full-bridge inverter and the secondary side of the transformer is coupled to the rectifier.

This provides the advantage that the transformer can be used as basic component for galvanically decoupling. High voltage side can thus be decoupled from low voltage side.

In an exemplary implementation of the photo-voltaic power conversion arrangement, the second DC-DC converter stage comprises a resonant converter.

By using such a resonant converter, the operation of the system can be optimized for efficiency and power density as the power stages can be operated at their optimum conditions. For instance, a Series Resonant Converter (SRC) operating at constant frequency and constant duty-cycle can be advantageously used as resonant converter.

In an exemplary implementation of the photo-voltaic power conversion arrangement, the second DC-DC converter stage comprises: a primary resonant tank coupled between the full-bridge inverter and the primary side of the transformer.

This allows flexible design for the DC-DC converter arrangement, since the second DC-DC converter stage requires only a primary resonant tank without a secondary resonant tank. Alternatively, a primary and secondary resonant tank can be implemented but this is optional: The second DC-DC converter stage may optionally comprise a secondary resonant tank coupled between the secondary side of the transformer and the rectifier.

In an exemplary implementation of the photo-voltaic power conversion arrangement, the full-bridge inverter is configured to operate at a fixed duty cycle and at a fixed frequency corresponding to a resonant frequency of the primary resonant tank.

This provides the advantage of easy construction of the full-bridge inverter with relaxed design requirements for this inverter, in particular if the photo-voltaic power conversion arrangement has only a primary resonant tank and no secondary resonant tank.

According to a second aspect, the disclosure relates to a method for connecting a plurality of photo-voltaic panels of a photo-voltaic arrangement via a transmission line to a power grid network by using a photo-voltaic power conversion arrangement, the photo-voltaic power conversion arrangement comprising: a plurality of photo-voltaic converter modules connected in series, each photo-voltaic converter module comprising a plurality of parallel connected DC-DC converter cells, each DC-DC converter cell comprising: a first terminal being configured to provide a first DC voltage; a second terminal being configured to provide a second DC voltage; a first DC-DC converter stage; and a second DC-DC converter stage, the method comprising: connecting the DC-DC converter cell to a respective photo-voltaic panel of the photo-voltaic arrangement associated with the DC-DC converter cell, by using the first terminal; connecting the DC-DC converter cell to the transmission line by using the second terminal; converting the first DC voltage into an intermediate DC voltage by using the first DC-DC converter stage, wherein a power converted by the first DC-DC converter stage corresponds to a partial power provided by the respective photo-voltaic panel; and providing the second DC voltage based on a conversion of the first DC voltage and the intermediate DC voltage by using the second DC-DC converter stage, wherein the first terminal is galvanically isolated from the second terminal.

This method can be advantageously applied for PV power conversion applications. The method provides MPPT tracking options, large voltage conversion ratio, and galvanic isolation while ensuring high conversion efficiency.

According to a third aspect, which is not claimed, the disclosure relates to a computer program product including computer executable code or computer executable instructions that, when executed, causes at least one computer to execute the method according to the second aspect described above.

The computer program product may run on a controller or a processor for controlling the above-described photo-voltaic power conversion arrangement.

According to a fourth aspect, which is not claimed, the disclosure relates to a computer-readable medium, storing instructions that, when executed by a computer, cause the computer to execute the method according to the second aspect described above. Such a computer readable medium may be a non-transient readable storage medium. The instructions stored on the computer-readable medium may be executed by a controller or a processor.

## BRIEF DESCRIPTION OF THE DRAWINGS

Further embodiments of the disclosure will be described with respect to the following figures, in which:

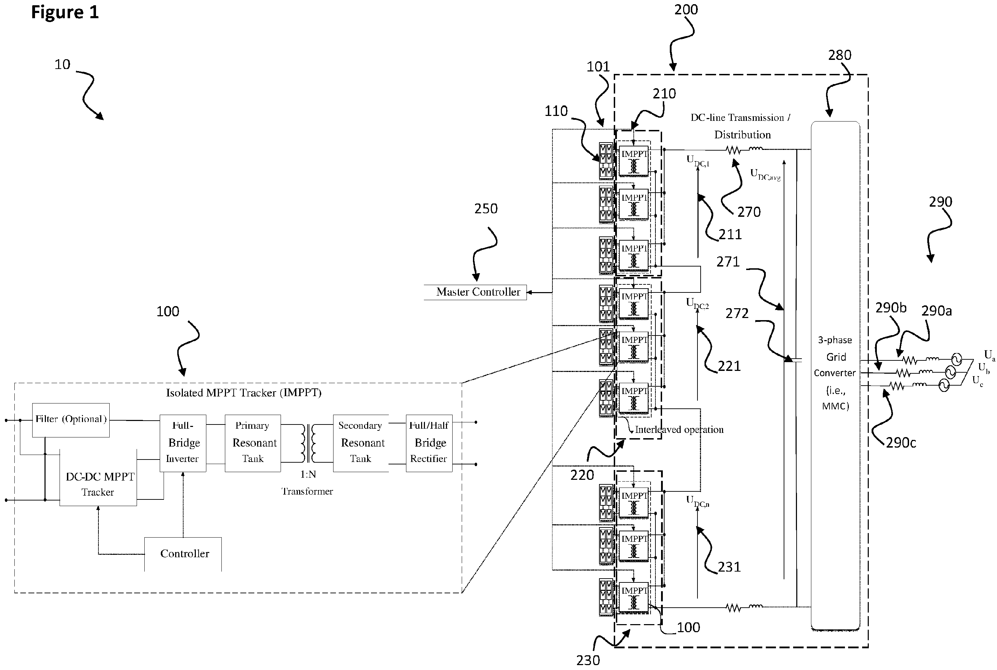

Figure 1 shows a circuit diagram of a photo-voltaic system 10 with a photo-voltaic power conversion arrangement 200 according to the disclosure;

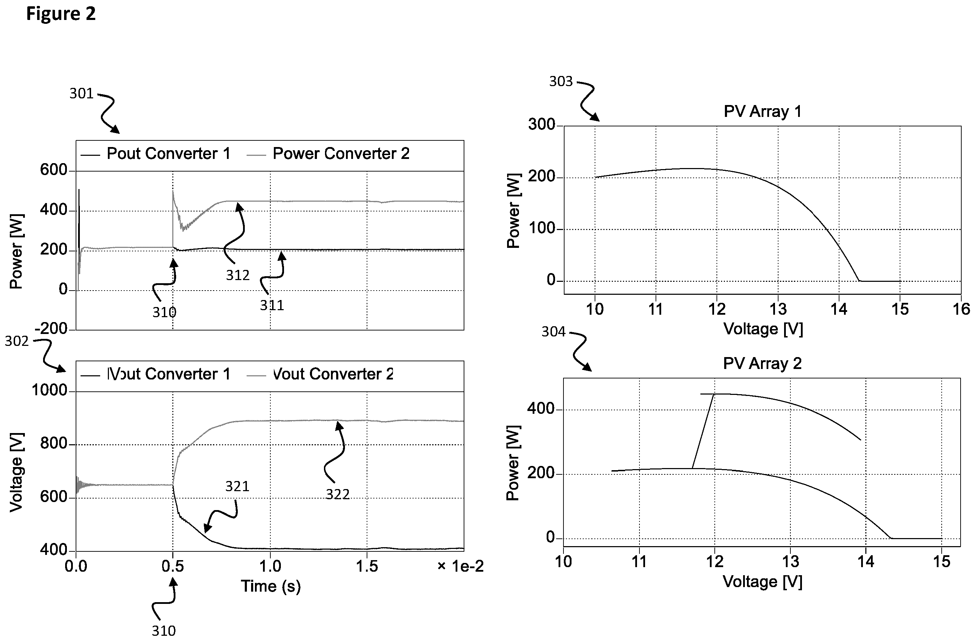

Figure 2 shows exemplary performance diagrams 301, 302, 303, 304 illustrating the natural voltage balancing mechanism of the PV system 10 when the irradiance of the PV arrays is not uniform;

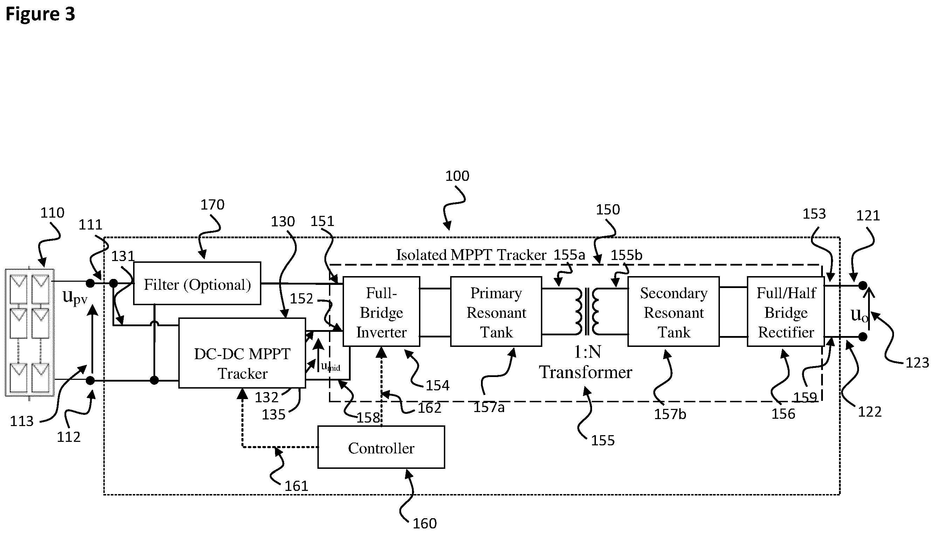

Figure 3 shows a circuit block diagram of a DC-DC converter cell 100 according to the disclosure;

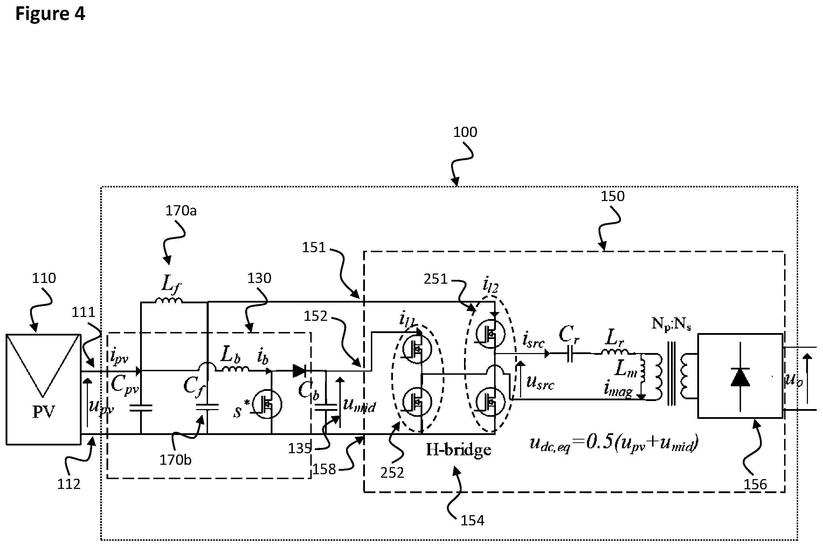

Figure 4 shows a circuit block diagram of an exemplary DC-DC converter cell 100 according to an embodiment;

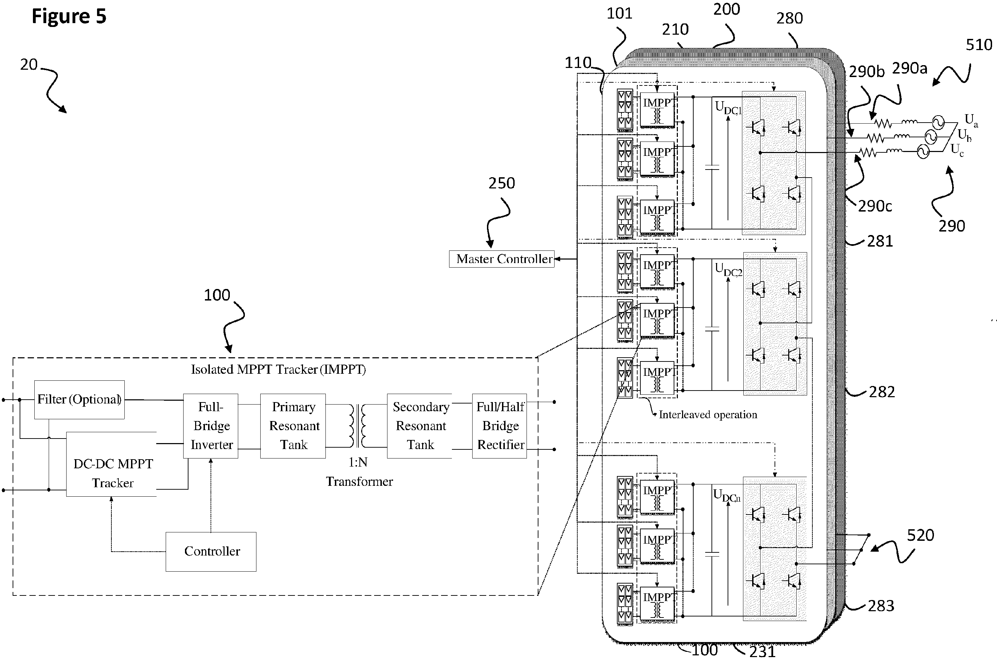

Figure 5 shows a circuit diagram of a photo-voltaic system 20 with a photo-voltaic power conversion arrangement 200 according to a first embodiment;

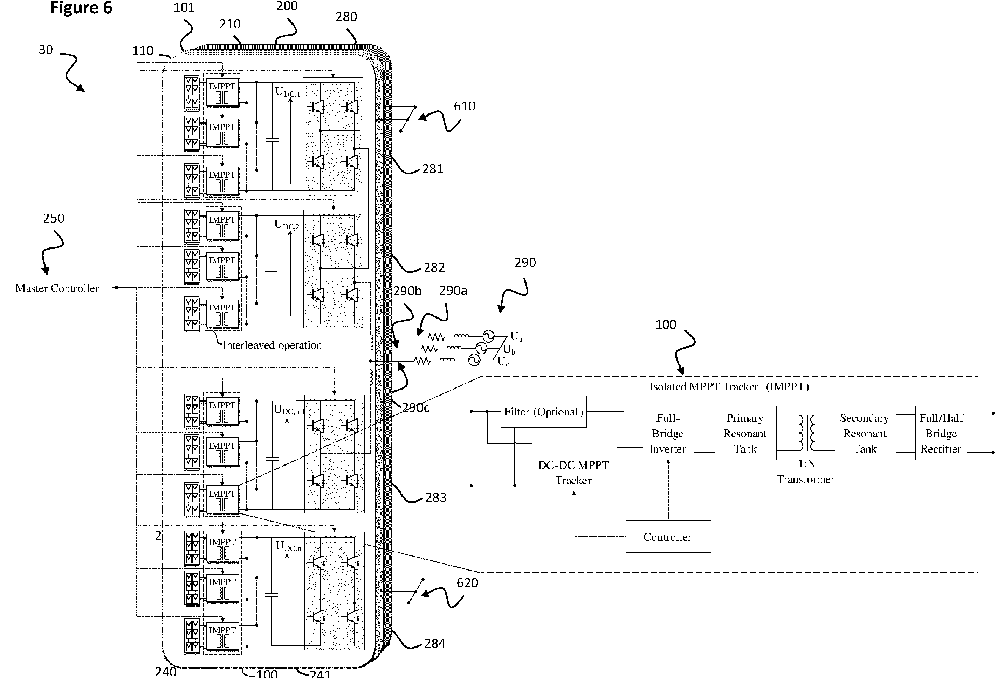

Figure 6 shows a circuit diagram of a photo-voltaic system 30 with a photo-voltaic power conversion arrangement 200 according to a second embodiment; and

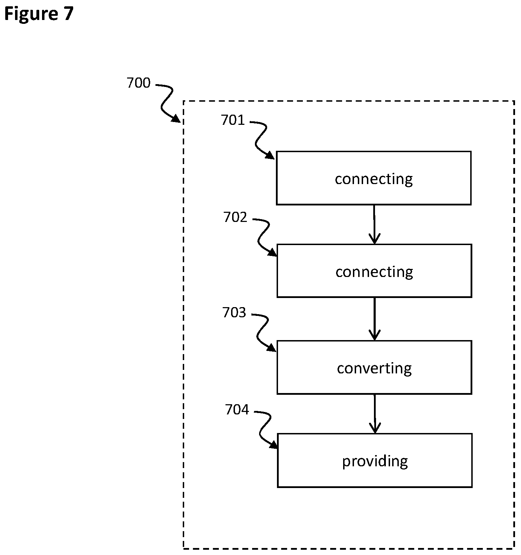

Figure 7 shows a schematic diagram illustrating a method 700 for connecting a plurality of PV panels to a power grid network according to the disclosure.

## DETAILED DESCRIPTION OF EMBODIMENTS

In the following detailed description, reference is made to the accompanying drawings, which form a part thereof, and in which is shown by way of illustration specific aspects in which the disclosure may be practiced. It is understood that other aspects may be utilized and structural or logical changes may be made without departing from the scope of the disclosure. The following detailed description, therefore, is not to be taken in a limiting sense, and the scope of the disclosure is defined by the appended claims.

It is understood that comments made in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

The disclosure entails PV architectures and their respective control strategy. These architectures rely on the use of a partial-power DC/DC topology and a dedicated control strategy which achieves higher overall efficiencies. The main architecture is shown in Figure 1 further detailed with respect to Figures 2 to 4 and 7. Two alternative configurations are shown in Figures 5 and 6.

Figure 1 shows a circuit diagram of a photo-voltaic system 10 with a photo-voltaic power conversion arrangement 200 according to the disclosure.

Figure 1 shows the main architecture of a photo-voltaic system. It is particularly attractive for PV systems where the point-of-common-coupling (PCC) with a MV/HV grid is at a large distance. Here, one or a set of panels/arrays/strings 110 are connected to an intermediate DC-link via an isolated DC-DC converter referred here to as "Isolated Partial-power MPPT tracker" or DC-DC converter cell 100. Several of these units 100 can be connected in parallel to a common DC-link ($U_{DC,1...n}$) 211, 221, 231. They can be operated synchronously or in interleaved mode to reduce the harmonic content and DC-link capacitance. During operation, this converter 100 provides galvanic isolation and realizes the MPPT function with a local dedicated controller 160 (see Figure 3). The detailed structure of this converter 100 is discussed below with respect to Figure 3.

The series arrangement of modules forms a MV DC-link that can be used for transmission/distribution 270. A back-end MV inverter, also referred to as DC-AC power converter 280 hereinafter, such as an MMC (see Figure 6) can then be used for grid 290 interconnection. This DC-link 270 can be several kilometers long. Therefore, communication latency will be inherently present between the front-end 100 and back-end 280 controllers. Thus, a distributed control strategy is a must. The amplitude of the DC-link voltage 271, $U_{dc,avg}$, is regulated only by the back-end converter 280 (e.g., MMC) without need of fast communication between front-end 100 and back-end 280 converters. A local controller 160 (see Figure 3) operates each individual non-isolated DC-DC tracker 100, regulating the current/voltage of the PV panel/array 110 in an effort to ensure MPPT operation. A Master front-end controller 250 can regulate the overall front-end system.

The photo-voltaic system 10 comprises a photo-voltaic power conversion arrangement 200 for connecting a plurality of photo-voltaic panels 110 of a photo-voltaic arrangement 101 via a transmission line 270 to a power grid network 290.

The photo-voltaic power conversion arrangement 200 comprises a plurality of photo-voltaic converter modules 210, 220, 230 connected in series. Each photo-voltaic converter module 210, 220, 230 comprises a plurality of parallel connected DC-DC converter cells 100.

Each DC-DC converter cell 100 comprises: a first terminal 111, a second terminal 121, a first DC-DC converter stage 130 and a second DC-DC converter stage 150 as shown in Figure 3.

The first terminal 111 connects the DC-DC converter cell 100 to a respective photo-voltaic panel 110 of the photo-voltaic arrangement 101 associated with the DC-DC converter cell 100. The first terminal 111 is configured to provide a first DC voltage 113.

The second terminal 121 connects the DC-DC converter cell 100 to the transmission line 270. The second terminal 121 is configured to provide a second DC voltage 123.

The first DC-DC converter stage 130 converts the first DC voltage 113 into an intermediate DC voltage 135. A power converted by the first DC-DC converter stage 130 corresponds to a partial power provided by the respective photo-voltaic panel 110.

The second DC-DC converter stage 150 provides the second DC voltage 123 based on a conversion of the first DC voltage 113 and the intermediate DC voltage 135.

The second DC-DC converter stage 150 is configured to galvanically isolate the first terminal 111 from the second terminal 121.

Each photo-voltaic converter module 210, 220, 230 is configured to provide a respective DC link voltage 211, 221, 231. A sum of the DC link voltages 211, 221, 231 provided by the photo-voltaic converter modules 210, 220, 230 may correspond to an average DC link voltage 271.

The photo-voltaic power conversion arrangement 200 comprises a master controller 250 for controlling the operation mode of the plurality of photo-voltaic converter modules 210, 220, 230 by adjusting an operation of the individual DC-DC converter cells 100. The operation mode of the photo-voltaic converter modules 210, 220, 230 can be synchronous or interleaved.

In the synchronous operation mode the master controller 250 controls the DC-DC converter cells 100 of a respective photo-voltaic converter module 210, 220, 230 to synchronously provide power to the second DC voltages 123 at the second terminals 121.

In the interleaved operation mode, the master controller 250 controls the DC-DC converter cells 100 of a respective photo-voltaic converter module 210, 220, 230 to provide power to the second DC voltages 123 at the second terminals 121 in an interleaved manner.

The DC-DC converter cells 100 (IMMPT trackers) ensure maximum power extraction from the panels. The voltages at the second terminals 121 (see Figure 3) result from the overall DC link voltage and it is divided in Udc1, Udc2, etc., depending on the power extracted from each module.

The master controller 250 can control the plurality of photo-voltaic converter modules 210, 220, 230 to provide the power to the second DC voltages 123 at the second terminals 121 in the same voltage range.

The voltage at the output of each DC-DC converter cell (IMPPT) is the same and it is not controlled by controllers. This voltage depends only on the overall DC link and it is distributed depending on the power of each module 210, 220, 230. If they provide the same power, the voltages are the same, if not, they are not. The DC-DC converter cells 100, e.g., MPPT trackers, work more as the current source providing as much power as the panel can give to the output.

The master controller only needs to react when the voltage Udc1, UDC2 or UDC3 is increasing too much due to the difference in power produced by partial shading of the panels.

Each DC-DC converter cell 100 may comprise a cell-specific controller 160 (see Figure 3) configured to provide a respective control signal 161, 162 for controlling the first DC-DC converter stage 130 and the second DC-DC converter stage 150.

The cell-specific controller 160 may be configured to control the first DC-DC converter stage 130 based on a Maximum Power Point Tracking scheme.

The master controller 250 may be configured to control the cell-specific controller 160 of a DC-DC converter cell 100 to deviate from the Maximum Power Point Tracking scheme if the second DC voltage 123 exceeds a threshold voltage in an effort to control a voltage mismatch between the PV converter modules 210, 220, 230 due to imbalances produced by partial shading, irregular irradiance, etc.

The photo-voltaic power conversion arrangement 200 may comprise a DC-AC power converter 280 coupled between the plurality of photo-voltaic converter modules 210, 220, 230 and the power grid network 290. The DC-AC power converter 280 is configured to convert the average DC link voltage 271 to an AC voltage of the power grid network 290.

The DC-AC power converter 280 may comprise a DC-AC converter of any kind such as a modular-multilevel converter topology (see Figure 6) or a cascaded H-bridge topology (see Figure 5).

The DC-AC power converter 280 can connect the photo-voltaic power conversion arrangement 200 to a single-phase or to three phases 290a, 290b, 290c of the power grid network 290.

Figure 2 shows exemplary performance diagrams 301, 302, 303, 304 illustrating the natural voltage balancing mechanism of the PV system 10 when the irradiance of the PV arrays is not uniform.

An example is shown where the irradiance of a second PV array doubles with respect to a first PV array at t=50ms, 310 as shown in the left-hand side diagrams 301, 302. The output power 311 of the first PV array and the output power 312 of the second PV array are shown in diagram 301 while the output voltage 321 of the first PV array and the output voltage 322 of the second PV array are shown in diagram 302. Power voltage characteristics of the first PV array are shown in diagram 303 and power voltage characteristics of the second PV array are shown in diagram 304.

Due to non-uniform irradiation and partial shading, the output power of each panel/array/string 110 shown in Figure 1 will be different. The imbalance in power results in an imbalance in the voltage output $U_{DC,x}$ 211, 221, 231 of each DC-link. The output voltage of each DC-link x is regulated naturally by virtue of the conservation of power as shown in Figure 2.

The output voltage of the x-section is given by:

$$U_{DC,x} = U_{dc,avg} \frac{P_{o,x}}{P_{dc,avg}}$$

where $P_{o,x}$ is the power output of each DC-link, $P_{dc,avg} = \sum_{x=1}^{n} P_{o,x}$ and $U_{dc,avg} = \sum_{x=1}^{n} U_{DC,x}$. Evidently, the imbalance of power is directly proportional to the voltage imbalance. This imbalance is not a problem as long as the voltage at each DC-link, $U_{DC,x}$, does not exceed the limits of the Isolated Partial-power MPPT trackers 100.

This is ensured by the master front-end controller 250. This controller 250 imposes limits to the MPPT of each individual converter 100 to prevent over-voltage. This is achieved by forcing the panels 110 to an operating different from the MPPT point in-order to balance the power sharing and thus, the voltage sharing. In general, this will be only necessary in extreme situations when the imbalance of power is large as the overall system should be designed with an overvoltage tolerance margin. This margin can be extended to account for large power imbalances if required.

Figure 3 shows a circuit block diagram of a DC-DC converter cell 100 according to the disclosure. The DC-DC converter cell 100 corresponds to the DC-DC converter cells 100 described above with respect to Figure 1 and below with respect to Figures 4, 5 and 6.

The DC-DC converter cell 100 comprises a non-isolated DC-DC MPPT tracker 130, also referred to as first DC-DC converter stage 130 and a resonant converter 150, also referred to as second DC-DC converter stage 150, comprising a full-bridge inverter 154, a primary resonant tank 157a, a transformer 155, a secondary resonant tank 157b (if required), and a Full/half bridge rectifier 156. The resonant converter 150 can be of any kind (series, series-parallel, parallel-parallel, etc.); however, a series resonant converter (SRC) is the most recommended option. The resonant converter 150 can operate in open-loop at a fixed frequency determined by the resonant tank 157a, 157b (i.e., Lr and Cr for a SRC). The resonant converter 150 can be designed with a low quality factor since the frequency of operation is constant. The transformer 155 can be also optimized for operation at a constant frequency. The operation at constant frequency and fixed duty-cycle is optimum for the SRC converter as it ensures minimum switching losses, ZVS, and reduced transformer size. Moreover, since the frequency is constant, the SRC can operate with a low quality factor (Q). This enhances the power density and efficiency of the system.

The full-bridge imposes a square-voltage waveform across the resonant tank 157a, 157b and transformer 155. The equivalent peak amplitude of the voltage waveform is given by:

$$u_{dc,eq} = (u_{pv} + u_{mid})/2$$

where $u_{mid}$ is the output voltage of the non-isolated DC-DC stage 130. Consequently, the output voltage after the rectification stage 156 is given by:

$$u_o = \frac{N_s}{N_p} \times (u_{pv} + u_{mid})/2$$

where $N_p$ and $N_s$ are the number of turns of the primary 155a and secondary 155b sides, respectively. It is worth nothing that the SRC operates in open-loop and does not performed any regulation function. MPPT regulation is performed by the non-isolated partial-power converter 130.

One of the legs of the Full-bridge converter 154 is connected to the PV panel 110. A filter 170 can be optionally placed in between to reduce the harmonic content at the input of the system. The other leg of the Full-bridge converter 154 is connected to a non-isolated converter of any kind (buck, boost, buck-boost, etc.). In general, a buck converter is recommended (see Figure 4) as the portion of the power which is regulated is always lower than 50%. This percentage is proportional to the ratio between $u_{mid}$ and $u_{pv}$ as shown below:

$$PP[\%] = 100 \times \frac{u_{mid}}{u_{mid} + u_{pv}}$$

In the following the structure of the DC-DC converter cell 100 is described in detail.

The DC-DC converter cell 100 comprises: a first terminal 111, a second terminal 121, a first DC-DC converter stage 130 and a second DC-DC converter stage 150.

The first terminal 111 connects the DC-DC converter cell 100 to a respective photo-voltaic panel 110 of the photo-voltaic arrangement 101 associated with the DC-DC converter cell 100. The first terminal 111 is configured to provide a first DC voltage 113.

The second terminal 121 connects the DC-DC converter cell 100 to the transmission line 270 as shown in Figure 1. The second terminal 121 is configured to provide a second DC voltage 123.

The first DC-DC converter stage 130 converts the first DC voltage 113 into an intermediate DC voltage 135. A power converted by the first DC-DC converter stage 130 corresponds to a partial power provided by the respective photo-voltaic panel 110.

The second DC-DC converter stage 150 provides the second DC voltage 123 based on a conversion of the first DC voltage 113 and the intermediate DC voltage 135.

The second DC-DC converter stage 150 is configured to galvanically isolate the first terminal 111 from the second terminal 121.

The first terminal 111 may be configured to provide the first DC voltage 113 with respect to a first reference terminal 112. The second terminal 121 may be configured to provide the second DC voltage 123 with respect to a second reference terminal 122. The second reference terminal 122 is galvanically isolated from the first reference terminal 112.

The first DC-DC converter stage 130 comprises a first converter terminal 131 connected to the first terminal 111, and a second converter terminal 132. The first DC-DC converter stage 130 may be configured to provide the intermediate DC voltage 135 at the second converter terminal 132 with respect to the first reference terminal 112.

The second DC-DC converter stage 150 comprises: a first converter terminal 151 connected to the first terminal 111; a second converter terminal 152 connected to the second converter terminal 132 of the first DC-DC converter stage 130; a third converter terminal 153 connected to the second terminal 121; a fourth converter terminal 158 connected to the first reference terminal 112; and a fifth converter terminal 159 connected to the second reference terminal 122. The second DC-DC converter stage 150 may be configured to provide the second DC voltage 123 between the third converter terminal 153 and the second reference terminal 122.

As described above, the second DC-DC converter stage 150 may comprise: a full-bridge inverter 154 which may comprise a first inverter leg 251 connected between the first converter terminal 151 and the fourth converter terminal 158; and a second inverter leg 252 connected between the second converter terminal 152 and the fourth converter terminal 158 as shown in Figure 4.

As described above, the second DC-DC converter stage 150 may comprise a rectifier 156 connected to the second terminal 121 and to the second reference terminal 122.

The second DC-DC converter stage 150 may be configured to combine the first DC voltage 113 and the intermediate DC voltage 135 for conversion into the second DC voltage 123.

The first DC-DC converter stage 130 may comprise at least one DC-DC converter of any family, in particular a buck-converter, e.g., as shown in Figure 4, a boost-converter or a buck-boost converter, for conversion of the first DC voltage 113.

As described above, the second DC-DC converter stage 150 may comprise a transformer 155 comprising a primary side 155a and a secondary side 155b. The primary side 155a of the transformer 155 may be coupled to the full-bridge inverter 154 and the secondary side 155b of the transformer 155 may be coupled to the rectifier 156.

As described above, the second DC-DC converter stage 150 may comprise a resonant converter.

As described above, the second DC-DC converter stage 150 may comprise a primary resonant tank 157a coupled between the full-bridge inverter 154 and the primary side 155a of the transformer 155.

The full-bridge inverter 154 may be configured to operate at a fixed duty cycle and at a fixed frequency corresponding to a resonant frequency of the primary resonant tank 157a.

Different MPPT strategies can be designed for this system. Regarding the MPPT algorithm itself, no special requirement exists; thus, it can be any of the algorithms available in literature such as hill-climb, incremental conductance, etc. The MPPT strategy can act upon different parameters of the system such as the PV-panel parameters or the variables of the non-isolated DC-DC converter.

Figure 4 shows a circuit block diagram of an exemplary DC-DC converter cell 100 according to an embodiment. The DC-DC converter cell 100 is an example of a DC-DC converter cell with a buck converter.

The DC-DC converter cell 100 corresponds to the DC-DC converter cell 100 described above with respect to Figure 3, but in Figure 4 more details of the DC-DC converter cell 100 are shown and in this embodiment, the first DC-DC converter stage 130 is implemented as a buck-converter.

The first DC-DC converter stage 130, i.e., the non-isolated converter 130 comprises an inductor $L_b$, a diode and a transistor forming the buck-converter. The transistor is controlled by a control signal S*. The control signal S* may be controlled by the controller 160 as described above with respect to Figure 3, for example by an MPPT scheme.

An energy storage 140 is implemented by a capacitor $C_b$ coupled to the first DC-DC converter stage 130. The capacitor $C_b$ is connected between the second converter terminal 152 and the fourth converter terminal 158.

The energy storage 140 is configured to store energy based on the intermediate DC voltage $u_{mid}$, 135. The energy stored in the energy storage 140 corresponds to a partial power provided by the photo-voltaic panel 110.

The second DC-DC converter stage 150 comprises a full-bridge inverter 154. The full-bridge inverter 154 comprises a first inverter leg 251 connected between the first converter terminal 151 and the fourth converter terminal 158; and a second inverter leg 252 connected between the second converter terminal 152 and the fourth converter terminal 158.

As described above with respect to Figure 3, the DC-DC converter cell 100 comprises an optional low-pass filter 170 with filter inductance 170a and filter capacitance 170b. The low-pass filter inductance $L_f$ 170a is coupled between the first terminal 111 and the first converter terminal 151 of the second DC-DC converter stage 150. The low-pass filter capacitance $C_f$ 170b is coupled between the first converter terminal 151 and the fourth converter terminal 158 of the second DC-DC converter stage 150. The low-pass filter 170a, 170b is configured to suppress current harmonics of the photo-voltaic panel 110.

The first terminal 111 and the first reference terminal 112 are coupled by a capacitance $C_{pv}$.

Figure 5 shows a circuit diagram of a photo-voltaic system 20 with a photo-voltaic power conversion arrangement 200 according to a first embodiment. The photo-voltaic system 20 is based on a Cascaded H-bridge (CHB) architecture with partial power MPPT tracker.

The photo-voltaic power conversion arrangement 200 is a specific implementation of the photo-voltaic power conversion arrangement 200 described above with respect to Figure 1, where the DC-AC power converter 280 is implemented according to a CHB topology.

This architecture can be seen in Fig. 5. It is particularly useful for PV systems located close to the point of common coupling (PCC) with a MV/HV grid. Similar to the system 10 described above with respect to Figure 1, each PV array/panel/string 110 is connected to a DC-link 211, 221, 231 via Isolated Partial-Power MPPT trackers 100, referred to as DC-DC converter cells 100 in this disclosure. Each DC-link 211, 221, 231 is later connected to a Full-bridge 281, 282, 283. For each phase 290a, 290b, 290c (a, b, and c), *n* modules 210, 220, 230 can be used, each with its respective H-bridge 281, 282, 283. The phases 290a, 290b, 290c may be connected to the grid 290 via a line-filter and interconnecting 520 between each other either in star (as shown in Figure 5) or in delta configuration.

A master controller 250 is used to operate the system 20. The master controller 250 has two main functions: 1) Controlling the Full-bridge 281, 282, 283 (1...*n*) of each phase 290a, 290b, 290c to inject active and reactive power into the grid 290. 2) Controlling the imbalance between modules 210, 220, 230 in one phase and between phases 290a, 290b, 290c. This imbalance is produced due to non-uniform irradiation in the panels 110. Different strategies can be applied for controlling this imbalance.

Figure 6 shows a circuit diagram of a photo-voltaic system 30 with a photo-voltaic power conversion arrangement 200 according to a second embodiment. The photo-voltaic system 30 is based on a Modular Multilevel converter (MMC) architecture with partial power MPPT tracker.

The photo-voltaic power conversion arrangement 200 is a specific implementation of the photo-voltaic power conversion arrangement 200 described above with respect to Figure 1, where the DC-AC power converter 280 is implemented according to an MMC topology.

Similar to the system 20 described above with respect to Figure 5, an MMC topology can also be used in combination with the Isolated Partial-power MPPT tracker 100, i.e., the DC-DC converter cell 100. This architecture is shown in Figure 6. The system components and behavior are similar to the CHB case described above with respect to Figure 5. Likewise, the Master controller 250 is responsible for the operation of the entire system 30 while individual local MPPT controllers 160 as shown and described above with respect to Figure 3 make sure each panel/array/string 110 operates at the MPPT. The main difference of the MMC topology to the CHB topology is the existence of the common dc-link and arm inductors 630 which are not present in the CHB topology.

Figure 7 shows a schematic diagram illustrating a method 700 for connecting a plurality of PV panels to a power grid network according to the disclosure.

The method 700 is used for connecting a plurality of photo-voltaic panels 110 of a photo-voltaic arrangement 101 via a transmission line 270 to a power grid network 290 by using a photo-voltaic power conversion arrangement 200 as described above with respect to Figures 1 to 6. Such photo-voltaic power conversion arrangement 200 comprises: a plurality of photo-voltaic converter modules 210, 220, 230 connected in series. Each photo-voltaic converter module 210, 220, 230 comprises a plurality of parallel connected DC-DC converter cells 100. Each DC-DC converter cell 100 comprises: a first terminal 111 being configured to provide a first DC voltage; a second terminal 121 being configured to provide a second DC voltage; a first DC-DC converter stage 130; and a second DC-DC converter stage 150 as described above with respect to Figures 1 and 3.

The method 700 comprises: connecting 701 the DC-DC converter cell 100 to a respective photo-voltaic panel 110 of the photo-voltaic arrangement 101 associated with the DC-DC converter cell 100, by using the first terminal 111.

The method 700 comprises: connecting 702 the DC-DC converter cell 100 to the transmission line 270 by using the second terminal 121.

The method 700 comprises: converting 703 the first DC voltage into an intermediate DC voltage by using the first DC-DC converter stage, wherein a power converted by the first DC-DC converter stage corresponds to a partial power provided by the respective photo-voltaic panel, e.g., as described above with respect to Figures 1 to 6.

The method 700 comprises: providing 704 the second DC voltage based on a conversion of the first DC voltage and the intermediate DC voltage by using the second DC-DC converter stage, wherein the first terminal is galvanically isolated from the second terminal, e.g., as described above with respect to Figures 1 to 6.

While a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the disclosure.

Many alternatives, modifications, and variations will be apparent to those skilled in the art in light of the above teachings.

## Claims

**1.** A photo-voltaic power conversion arrangement

(200) for connecting a plurality of photo-voltaic panels (110) of a photo-voltaic arrangement (101) via a transmission line (270) to a power grid network (290), the photo-voltaic power conversion arrangement (200) comprising:
a plurality of photo-voltaic converter modules (210, 220, 230) connected in series, each photo-voltaic converter module (210, 220, 230) comprising a plurality of parallel connected DC-DC converter cells (100), each DC-DC converter cell (100) comprising:

a first terminal (111) for connecting the DC-DC converter cell (100) to a respective photo-voltaic panel (110) of the photo-voltaic arrangement (101) associated with the DC-DC converter cell (100), the first terminal (111) being configured to provide a first DC voltage (113);
a second terminal (121) for connecting the DC-DC converter cell (100) to the transmission line (270), the second terminal (121) being configured to provide a second DC voltage (123);
**characterized in that** each DC-DC converter cell (100) further comprises:

a first DC-DC converter stage (130) configured to convert the first DC voltage (113) into an intermediate DC voltage (135), wherein a power converted by the first DC-DC converter stage (130) corresponds to a partial power provided by the respective photo-voltaic panel (110); and
a second DC-DC converter stage (150) configured to provide the second DC voltage (123) based on a conversion of the first DC voltage (113) and the intermediate DC voltage (135), wherein the second DC-DC converter stage (150) is configured to galvanically isolate the first terminal (111) from the second terminal (121).

2. The photo-voltaic power conversion arrangement (200) of claim 1,

wherein each photo-voltaic converter module (210, 220, 230) is configured to provide a respective DC link voltage (211, 221, 231), wherein a sum of the DC link voltages (211, 221, 231) provided by the photo-voltaic converter modules (210, 220, 230) corresponds to an average DC link voltage (271).

3. The photo-voltaic power conversion arrangement (200) of claim 2, comprising:

a master controller (250) configured to control the operation mode of the plurality of photo-voltaic converter modules (210, 220, 230) by adjusting an operation of the individual DC-DC converter cells (100),
wherein the operation mode of the photo-voltaic converter modules (210, 220, 230) is synchronous or interleaved.

4. The photo-voltaic power conversion arrangement (200) of claim 3,

wherein in the synchronous operation mode the master controller (250) is configured to control the DC-DC converter cells (100) of a respective photo-voltaic converter module (210, 220, 230) to synchronously provide power to the second DC voltages (123) at the second terminals (121); and
wherein in the interleaved operation mode, the master controller (250) is configured to control the DC-DC converter cells (100) of a respective photo-voltaic converter module (210, 220, 230) to provide power to the second DC voltages (123) at the second terminals (121) in an interleaved manner.

5. The photo-voltaic power conversion arrangement (200) of claim 3 or 4,
wherein the master controller (250) is configured to control the plurality of photo-voltaic converter modules (210, 220, 230) to provide the power to the second DC voltages (123) at the second terminals (121) in the same voltage range.

6. The photo-voltaic power conversion arrangement (200) of any of claims 3 to 5, wherein each DC-DC converter cell (100) comprises:
a cell-specific controller (160) configured to provide a respective control signal (161, 162) for controlling the first DC-DC converter stage (130) and the second DC-DC converter stage (150).

7. The photo-voltaic power conversion arrangement (200) of claim 6,
wherein the cell-specific controller (160) is configured to control the first DC-DC converter stage (130) based on a Maximum Power Point Tracking scheme.

8. The photo-voltaic power conversion arrangement (200) of claim 7,
wherein the master controller (250) is configured to control the cell-specific controller (160) of a DC-DC converter cell to deviate from the Maximum Power Point Tracking scheme if the second DC voltage (123) exceeds a threshold voltage in an effort to control a voltage mismatch between the photo-voltaic converter modules (210, 220, 230) due to imbalances produced by partial shading, irregular irradiance, etc.

9. The photo-voltaic power conversion arrangement (200) of any of claims 3 to 8, comprising: a DC-AC power converter (280) coupled between the plurality of photo-voltaic converter modules (210, 220, 230) and the power grid network (290), the DC-AC power converter (280) being configured to convert the average DC link voltage (271) to an AC voltage of the power grid network (290).

10. The photo-voltaic power conversion arrangement (200) of claim 9,
wherein the DC-AC power converter (280) comprises a DC-AC converter of any kind such as a modular-multilevel converter topology or a cascaded H-bridge topology.

11. The photo-voltaic power conversion arrangement (200) of claim 10,
wherein the DC-AC power converter (280) is configured to connect the photo-voltaic power conversion arrangement (200) to a single-phase or to three phases (290a, 290b, 290c) of the power grid network (290).

12. The photo-voltaic power conversion arrangement (200) of any of the preceding claims,

wherein the first terminal (111) is configured to provide the first DC voltage (113) with respect to a first reference terminal (112); and
wherein the second terminal (121) is configured to provide the second DC voltage (123) with respect to a second reference terminal (122), the second reference terminal (122) being galvanically isolated from the first reference terminal (112).

13. The photo-voltaic power conversion arrangement (200) of claim 12,
wherein the first DC-DC converter stage (130) comprises a first converter terminal (131) connected to the first terminal (111), and a second converter terminal (132), the first DC-DC converter stage (130) being configured to provide the intermediate DC voltage (135) at the second converter terminal (132) with respect to the first reference terminal (112).

14. The photo-voltaic power conversion arrangement (200) of claim 13, wherein the second DC-DC converter stage (150) comprises:

a first converter terminal (151) connected to the first terminal (111);
a second converter terminal (152) connected to the second converter terminal (132) of the first DC-DC converter stage (130);
a third converter terminal (153) connected to the second terminal (121);
a fourth converter terminal (158) connected to the first reference terminal (112); and
a fifth converter terminal (159) connected to the second reference terminal (122),
wherein the second DC-DC converter stage (150) is configured to provide the second DC voltage (123) between the third converter terminal (153) and the second reference terminal (122).

15. A method (700) for connecting a plurality of photo-voltaic panels of a photo-voltaic arrangement via a transmission line to a power grid network by using a photo-voltaic power conversion arrangement (200), the photo-voltaic power conversion arrangement comprising: a plurality of photo-voltaic converter modules connected in series, each photo-voltaic converter module comprising a plurality of parallel connected DC-DC converter cells, each DC-DC converter cell comprising: a first terminal being configured to provide a first DC voltage; a second terminal being configured to provide a second DC voltage; a first DC-DC converter stage; and a second DC-DC converter stage, the method (700) comprising:

connecting (701) the DC-DC converter cell to a respective photo-voltaic panel of the photo-voltaic arrangement associated with the DC-DC converter cell, by using the first terminal;
connecting (702) the DC-DC converter cell to the transmission line by using the second terminal;
**characterized by** converting (703) the first DC voltage into an intermediate DC voltage by using the first DC-DC converter stage, wherein a power converted by the first DC-DC converter stage corresponds to a partial power provided by the respective photo-voltaic panel; and
providing (704) the second DC voltage based on a conversion of the first DC voltage and the intermediate DC voltage by using the second DC-DC converter stage, wherein the first terminal is galvanically isolated from the second terminal.

**Patentansprüche**

1. Anordnung zur Umwandlung von fotovoltaischer Energie (200) zum Verbinden von einer Vielzahl von fotovoltaischen Paneelen (110) einer fotovoltaischen Anordnung (101) über eine Übertragungsleitung (270) mit einem Energienetz (290), wobei die Anordnung zur Umwandlung von fotovoltaischer Energie (200) Folgendes umfasst:
eine Vielzahl von fotovoltaischen Wandlermodulen (210, 220, 230), die in Reihe verbunden ist, wobei jedes fotovoltaische Wandlermodul (210, 220, 230) eine Vielzahl von parallel verbundenen DC-DC-Wandlerzellen (100) umfasst, wobei jede DC-DC-Wandlerzelle (100) Folgendes umfasst:

einen ersten Anschluss (111) zum Verbinden der DC-DC-Wandlerzelle (100) mit einem jeweiligen fotovoltaischen Paneel (110) der fotovoltaischen Anordnung (101), das mit der DC-DC-Wandlerzelle (100) assoziiert ist, wobei der erste Anschluss (111) dazu konfiguriert ist, eine erste DC-Spannung (113) bereitzustellen;
einen zweiten Anschluss (121) zum Verbinden der DC-DC-Wandlerzelle (100) mit der Übertragungsleitung (270), wobei der zweite Anschluss (121) dazu konfiguriert ist, eine zweite DC-Spannung (123) bereitzustellen;
**dadurch gekennzeichnet, dass** jede DC-DC-Wandlerzelle (100) ferner Folgendes umfasst:

eine erste DC-DC-Wandlerstufe (130), die dazu konfiguriert ist, die erste DC-Spannung (113) in eine DC-Zwischenspannung (135) umzuwandeln, wobei eine Energie, die durch die erste DC-DC-Wandlerstufe (130) umgewandelt wird, einer Teilenergie entspricht, die durch das jeweilige fotovoltaische Paneel (110) bereitgestellt ist; und
eine zweite DC-DC-Wandlerstufe (150), die dazu konfiguriert ist, die zweite DC-Spannung (123) basierend auf einer Umwandlung der ersten DC-Spannung (113) und der DC-Zwischenspannung (135) bereitzustellen,
wobei die zweite DC-DC-Wandlerstufe (150) dazu konfiguriert ist, den ersten Anschluss (111) von dem zweiten Anschluss (121) galvanisch zu isolieren.

2. Anordnung zur Umwandlung von fotovoltaischer Energie (200) nach Anspruch 1,

wobei jedes fotovoltaische Wandlermodul (210, 220, 230) dazu konfiguriert ist, eine jeweilige DC-Zwischenkreisspannung (211, 221, 231) bereitzustellen,
wobei eine Summe der DC-Zwischenkreisspannungen (211, 221, 231), die durch die fotovoltaischen Wandlermodule (210, 220, 230) bereitgestellt wird, einer durchschnittlichen DC-Zwischenkreisspannung (271) entspricht.

3. Anordnung zur Umwandlung von fotovoltaischer Energie (200) nach Anspruch 2, umfassend:

eine Master-Steuerung (250), die dazu konfiguriert ist, den Betriebsmodus der Vielzahl von fotovoltaischen Wandlermodulen (210, 220, 230) durch Anpassen eines Betriebs der einzelnen DC-DC-Wandlerzellen (100) zu steuern, wobei der Betriebsmodus der fotovoltaischen Wandlermodule (210, 220, 230) synchron oder verschachtelt ist.

4. Anordnung zur Umwandlung von fotovoltaischer Energie (200) nach Anspruch 3,

wobei in dem synchronen Betriebsmodus die Master-Steuerung (250) dazu konfiguriert ist, die DC-DC-Wandlerzellen (100) eines jeweiligen fotovoltaischen Wandlermoduls (210, 220, 230) zu steuern, um den zweiten DC-Spannungen (123) an den zweiten Anschlüssen (121) synchron Energie bereitzustellen; und
wobei in dem verschachtelten Betriebsmodus die Master-Steuerung (250) dazu konfiguriert ist, die DC-DC-Wandlerzellen (100) eines jeweiligen fotovoltaischen Wandlermoduls (210, 220, 230) zu steuern, um den zweiten DC-Spannungen (123) an den zweiten Anschlüssen (121) Energie auf eine verschachtelte Weise bereitzustellen.

5. Anordnung zur Umwandlung von fotovoltaischer Energie (200) nach Anspruch 3 oder 4, wobei die Master-Steuerung (250) dazu konfiguriert ist, die Vielzahl von fotovoltaischen Wandlermodulen (210, 220, 230) zu steuern, um die Energie den zweiten DC-Spannungen (123) an den zweiten Anschlüssen (121) in dem gleichen Spannungsbereich bereitzustellen.

6. Anordnung zur Umwandlung von fotovoltaischer Energie (200) nach einem der Ansprüche 3 bis 5, wobei jede DC-DC-Wandlerzelle (100) Folgendes umfasst:
eine zellspezifische Steuerung (160), die dazu konfiguriert ist, ein jeweiliges Steuersignal (161, 162) zum Steuern der ersten DC-DC-Wandlerstufe (130) und der zweiten DC-DC-Wandlerstufe (150) bereitzustellen.

7. Anordnung zur Umwandlung von fotovoltaischer Energie (200) nach Anspruch 6, wobei die zellspezifische Steuerung (160) dazu konfiguriert ist, die erste DC-DC-Wandlerstufe (130) basierend auf einem Maximum-Power-Point-Tracking-Schema zu steuern.

8. Anordnung zur Umwandlung von fotovoltaischer Energie (200) nach Anspruch 7, wobei die Master-Steuerung (250) dazu konfiguriert ist, die zellspezifische Steuerung (160) einer DC-DC-Wandlerzelle zu steuern, um von dem Maximum-Power-Point-Tracking-Schema abzuweichen, wenn die zweite DC-Spannung (123) eine Schwellenspannung in einem Versuch überschreitet, eine Spannungsfehlanpassung zwischen den fotovoltaischen Wandlermodulen (210, 220, 230) aufgrund von Ungleichgewichten, die durch teilweise Beschattung, unregelmäßige Bestrahlungsstärke usw. produziert werden, zu steuern.

9. Anordnung zur Umwandlung von fotovoltaischer Energie (200) nach einem der Ansprüche 3 bis 8, umfassend:
einen DC-AC-Energiewandler (280), der zwischen der Vielzahl von fotovoltaischen Wandlermodulen (210, 220, 230) und dem Energienetz (290) gekoppelt ist, wobei der DC-AC-Energiewandler (280) dazu konfiguriert ist, die durchschnittliche DC-Zwischenkreisspannung (271) in eine AC-Spannung des Energienetzes (290) umzuwandeln.

10. Anordnung zur Umwandlung von fotovoltaischer Energie (200) nach Anspruch 9,
wobei der DC-AC-Energiewandler (280) einen DC-AC-Wandler einer beliebigen Art umfasst, wie eine modulare Multilevel-Wandlertopologie oder eine kaskadierte H-Brückentopologie.

11. Anordnung zur Umwandlung von fotovoltaischer Energie (200) nach Anspruch 10,
wobei der DC-AC-Energiewandler (280) dazu konfiguriert ist, die Anordnung zur Umwandlung von fotovoltaischer Energie (200) mit einer einzelnen Phase oder mit drei Phasen (290a, 290b, 290c) des Energienetzes (290) zu verbinden.

12. Anordnung zur Umwandlung von fotovoltaischer Energie (200) nach einem der vorhergehenden Ansprüche,

wobei der erste Anschluss (111) dazu konfiguriert ist, die erste DC-Spannung (113) in Bezug auf einen ersten Referenzanschluss (112) bereitzustellen; und
wobei der zweite Anschluss (121) dazu konfiguriert ist, die zweite DC-Spannung (123) in Bezug auf einen zweiten Referenzanschluss (122) bereitzustellen, wobei der zweite Referenzanschluss (122) von dem ersten Referenzanschluss (112) galvanisch isoliert ist.

13. Anordnung zur Umwandlung von fotovoltaischer Energie (200) nach Anspruch 12,
wobei die erste DC-DC-Wandlerstufe (130) einen ersten Wandleranschluss (131), der mit dem ersten Anschluss (111) verbunden ist, und einen zweiten Wandleranschluss (132) umfasst, wobei die erste DC-DC-Wandlerstufe (130) dazu konfiguriert ist, die DC-Zwischenspannung (135) an dem zweiten Wandleranschluss (132) in Bezug auf den ersten Referenzanschluss (112) bereitzustellen.

14. Anordnung zur Umwandlung von fotovoltaischer Energie (200) nach Anspruch 13, wobei die zweite DC-DC-Wandlerstufe (150) Folgendes umfasst:

einen ersten Wandleranschluss (151), der mit dem ersten Anschluss (111) verbunden ist;
einen zweiten Wandleranschluss (152), der mit dem zweiten Wandleranschluss (132) der ersten DC-DC-Wandlerstufe (130) verbunden ist;
einen dritten Wandleranschluss (153), der mit dem zweiten Anschluss (121) verbunden ist;
einen vierten Wandleranschluss (158), der mit dem ersten Referenzanschluss (112) verbunden ist; und
einen fünften Wandleranschluss (159), der mit dem zweiten Referenzanschluss (122) verbunden ist,
wobei die zweite DC-DC-Wandlerstufe (150) dazu konfiguriert ist, die zweite DC-Spannung (123) zwischen dem dritten Wandleranschluss (153) und dem zweiten Referenzanschluss (122) bereitzustellen.

15. Verfahren (700) zum Verbinden einer Vielzahl von fotovoltaischen Paneelen einer fotovoltaischen Anordnung über eine Übertragungsleitung mit einem Energienetz durch Verwenden einer Anordnung zur Umwandlung von fotovoltaischer Energie (200), wobei die Anordnung zur Umwandlung von fotovoltaischer Energie Folgendes umfasst: eine Vielzahl von fotovoltaischen Wandlermodulen, die in Reihe verbunden ist, wobei jedes fotovoltaische Wandlermodul eine Vielzahl von parallel verbundenen DC-DC-Wandlerzellen umfasst, wobei jede DC-DC-Wandlerzelle Folgendes umfasst: einen ersten Anschluss, der dazu konfiguriert ist, eine erste DC-Spannung bereitzustellen; einen zweiten Anschluss, der dazu konfiguriert ist, eine zweite DC-Spannung bereitzustellen; eine erste DC-DC-Wandlerstufe; und eine zweite DC-DC-Wandlerstufe, wobei das Verfahren (700) Folgendes umfasst:

Verbinden (701) der DC-DC-Wandlerzelle mit einem jeweiligen fotovoltaischen Paneel der fotovoltaischen Anordnung, das mit der DC-DC-Wandlerzelle assoziiert ist, durch Verwenden des ersten Anschlusses;
Verbinden (702) der DC-DC-Wandlerzelle mit der Übertragungsleitung durch Verwenden des zweiten Anschlusses;
**gekennzeichnet durch** Umwandeln (703) der ersten DC-Spannung in eine DC-Zwischenspannung durch Verwenden der ersten DC-DC-Wandlerstufe, wobei eine Energie, die durch die erste DC-DC-Wandlerstufe umgewandelt wird, einer Teilenergie, durch das jeweilige fotovoltaische Paneel bereitgestellt wird, entspricht; und

Bereitstellen (704) der zweiten DC-Spannung basierend auf einer Umwandlung der ersten DC-Spannung und der DC-Zwischenspannung durch Verwenden der zweiten DC-DC-Wandlerstufe, wobei der erste Anschluss von dem zweiten Anschluss galvanisch isoliert ist.

## Revendications

1. Agencement de conversion de puissance photovoltaïque (200) pour connecter une pluralité de panneaux photovoltaïques (110) d'un agencement photovoltaïque (101) par le biais d'une ligne de transmission (270) à un réseau électrique (290), l'agencement de conversion de puissance photovoltaïque (200) comprenant :

   une pluralité de modules convertisseurs photovoltaïques (210, 220, 230) connectés en série, chaque module convertisseur photovoltaïque (210, 220, 230) comprenant une pluralité de cellules convertisseurs CC-CC connectées en parallèle (100),
   chaque cellule convertisseur CC-CC (100) comprenant :

      une première borne (111) pour connecter la cellule convertisseur CC-CC (100) à un panneau photovoltaïque respectif (110) de l'agencement photovoltaïque (101) associé à la cellule convertisseur CC-CC (100), la première borne (111) étant configurée pour fournir une première tension CC (113) ;
      une seconde borne (121) pour connecter la cellule convertisseur CC-CC (100) à la ligne de transmission (270), la seconde borne (121) étant configurée pour fournir une seconde tension CC (123) ;
      **caractérisé en ce que** chaque cellule convertisseur CC-CC (100) comprend également :

         un premier étage de convertisseur CC-CC (130) configuré pour convertir la première tension CC (113) en une tension CC intermédiaire (135), dans lequel la puissance convertie par le premier étage de convertisseur CC-CC (130) correspond à une puissance partielle fournie par le panneau photovoltaïque respectif (110) ; et
         un second étage de convertisseur CC-CC (150) configuré pour fournir la seconde tension CC (123) sur la base d'une conversion de la première tension CC (113) et de la tension CC intermédiaire (135),

      dans lequel le second étage de convertisseur CC-CC (150) est configuré pour isoler galvaniquement la première borne (111) de la seconde borne (121).

2. Agencement de conversion de puissance photovoltaïque (200) selon la revendication 1,

   dans lequel chaque module convertisseur photovoltaïque (210, 220, 230) est configuré pour fournir une tension de liaison CC respective (211, 221, 231),
   dans lequel une somme des tensions de liaison CC (211, 221, 231) fournies par les modules convertisseurs photovoltaïques (210, 220, 230) correspond à une tension de liaison CC moyenne (271).

3. Agencement de conversion de puissance photovoltaïque (200) selon la revendication 2, comprenant :

   un dispositif de commande maître (250) configuré pour commander le mode de fonctionnement de la pluralité de modules convertisseurs photovoltaïques (210, 220, 230) en ajustant un fonctionnement des cellules convertisseurs CC-CC (100) individuelles,
   dans lequel le mode de fonctionnement des modules convertisseurs photovoltaïques (210, 220, 230) est synchrone ou entrelacé.

4. Agencement de conversion de puissance photovoltaïque (200) selon la revendication 3,

   dans lequel, en mode de fonctionnement synchrone, le dispositif de commande maître (250) est configuré pour commander les cellules convertisseurs CC-CC (100) d'un module convertisseur photovoltaïque respectif (210, 220, 230) pour fournir de manière synchrone de l'énergie aux secondes tensions CC (123) aux secondes bornes (121) ; et
   dans lequel, en mode de fonctionnement entrelacé, le dispositif de commande maître (250) est configuré pour commander les cellules convertisseurs CC-CC (100) d'un module convertisseur photovoltaïque respectif (210, 220, 230) pour fournir de manière entrelacée de l'énergie aux secondes tensions CC (123) aux secondes bornes (121).

5. Agencement de conversion de puissance photovoltaïque (200) selon la revendication 3 ou 4,
   dans lequel le dispositif de commande maître (250) est configuré pour commander la pluralité de modules convertisseurs photovoltaïques (210, 220, 230) pour fournir l'énergie aux secondes tensions CC (123) aux secondes bornes (121) dans la même plage de tension.

6. Agencement de conversion de puissance photovoltaïque (200) selon l'une quelconque des revendications 3 à 5, dans lequel chaque cellule convertisseur CC-CC (100) comprend :
un dispositif de commande spécifique à la cellule (160) configuré pour fournir un signal de commande respectif (161, 162) pour commander le premier étage de convertisseur CC-CC (130) et le second étage de convertisseur CC-CC (150).

7. Agencement de conversion de puissance photovoltaïque (200) selon la revendication 6,
dans lequel le dispositif de commande spécifique à la cellule (160) est configuré pour commander le premier étage de convertisseur CC-CC (130) sur la base d'un schéma de suivi du point de puissance maximale.

8. Agencement de conversion de puissance photovoltaïque (200) selon la revendication 7,
dans lequel le dispositif de commande maître (250) est configuré pour commander le dispositif de commande spécifique à la cellule (160) d'une cellule convertisseur CC-CC pour s'écarter du schéma de suivi du point de puissance maximale si la seconde tension CC (123) dépasse une tension de seuil dans un effort pour commander une discordance de tension entre les modules convertisseurs photovoltaïques (210, 220, 230) en raison de déséquilibres produits par un ombrage partiel, une irradiance irrégulière, etc.

9. Agencement de conversion de puissance photovoltaïque (200) selon l'une quelconque des revendications 3 à 8, comprenant :
un convertisseur de puissance CC-CA (280) couplé entre la pluralité de modules convertisseurs photovoltaïques (210, 220, 230) et le réseau électrique (290), le convertisseur de puissance CC-CA (280) étant configuré pour convertir la tension de liaison CC moyenne (271) en une tension CA du réseau électrique (290).

10. Agencement de conversion de puissance photovoltaïque (200) selon la revendication 9,
dans lequel le convertisseur de puissance CC-CA (280) comprend un convertisseur CC-CA d'un quelconque type tel qu'une topologie de convertisseur modulaire à plusieurs niveaux ou une topologie de pont en H en cascade.

11. Agencement de conversion de puissance photovoltaïque (200) selon la revendication 10,
dans lequel le convertisseur de puissance CC-CA (280) est configuré pour connecter l'agencement de conversion de puissance photovoltaïque (200) à une phase unique ou à trois phases (290a, 290b, 290c) du réseau électrique (290).

12. Agencement de conversion de puissance photovoltaïque (200) selon l'une quelconque des revendications précédentes,

dans lequel la première borne (111) est configurée pour fournir la première tension CC (113) par rapport à une première borne de référence (112) ; et
dans lequel la seconde borne (121) est configurée pour fournir la seconde tension CC (123) par rapport à une seconde borne de référence (122), la seconde borne de référence (122) étant isolée galvaniquement de la première borne de référence (112).

13. Agencement de conversion de puissance photovoltaïque (200) selon la revendication 12,
dans lequel le premier étage de convertisseur CC-CC (130) comprend une première borne de convertisseur (131) connectée à la première borne (111), et une deuxième borne de convertisseur (132), le premier étage de convertisseur CC-CC (130) étant configuré pour fournir la tension CC intermédiaire (135) à la deuxième borne de convertisseur (132) par rapport à la première borne de référence (112).

14. Agencement de conversion de puissance photovoltaïque (200) selon la revendication 13, dans lequel le second étage de convertisseur CC-CC (150) comprend :

une première borne de convertisseur (151) connectée à la première borne (111) ;
une deuxième borne de convertisseur (152) connectée à la deuxième borne de convertisseur (132) du premier étage de convertisseur CC-CC (130) ;
une troisième borne de convertisseur (153) connectée à la seconde borne (121) ;
une quatrième borne de convertisseur (158) connectée à la première borne de référence (112) ; et
une cinquième borne de convertisseur (159) connectée à la seconde borne de référence (122),
dans lequel le second étage de convertisseur CC-CC (150) est configuré pour fournir la seconde tension CC (123) entre la troisième borne de convertisseur (153) et la seconde borne de référence (122).

15. Procédé (700) pour connecter une pluralité de panneaux photovoltaïques d'un agencement photovoltaïque à un réseau électrique par le biais d'une ligne de transmission, à l'aide d'un agencement de conversion de puissance photovoltaïque (200), l'agencement de conversion de puissance photovoltaïque comprenant : une pluralité de modules convertisseurs photovoltaïques connectés en série, chaque module convertisseur photovoltaïque comprenant une pluralité de cellules convertisseurs CC-CC connectées en parallèle, chaque cellule convertisseur CC-CC comprenant : une première borne configurée pour fournir une première tension CC ; une seconde borne configurée pour fournir une seconde tension CC ; un premier étage de convertisseur CC-CC ; et un second étage de convertisseur CC-CC, le procédé (700) comprenant :

la connexion (701) de la cellule convertisseur CC-CC à un panneau photovoltaïque respectif de l'agencement photovoltaïque associé à la cellule convertisseur CC-CC, à l'aide de la première borne ;

la connexion (702) de la cellule convertisseur CC-CC à la ligne de transmission à l'aide de la seconde borne ;

**caractérisé par** la conversion (703) de la première tension CC en une tension CC intermédiaire à l'aide du premier étage de convertisseur CC-CC, dans lequel une puissance convertie par le premier étage de convertisseur CC-CC correspond à une puissance partielle fournie par le panneau photovoltaïque respectif ; et

la fourniture (704) de la seconde tension CC sur la base d'une conversion de la première tension CC et de la tension CC intermédiaire à l'aide du second étage de convertisseur CC-CC, dans lequel la première borne est isolée galvaniquement de la seconde borne.

Figure 1

EP 4 434 132 B1

Figure 2

**Figure 3**

**Figure 4**

**Figure 5**

EP 4 434 132 B1

**Figure 6**

Figure 7

EP 4 434 132 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100157638 A1

- US 10263456 B1